# EUROPÄISCHE PATENTSCHRIFT

(11) **EP 1 040 027 B1**
(45) Veröffentlichungstag und Bekanntmachung des Hinweises auf die Patenterteilung: **08.08.2001**
(21) Anmeldenummer: 98965288.8
(22) Anmeldetag: 18.12.1998
(51) Int. Cl.: B60P 1/52, B60P 1/38, B60P 1/64

(54) **BE- UND ENTLADESYSTEM FÜR LASTKRAFTWAGEN, DEREN ANHÄNGER, TRANSPORTCONTAINER UND DERGL.**
LOADING AND UNLOADING SYSTEM FOR CARGO TRUCKS, THEIR TRAILERS, TRANSPORT CONTAINERS AND THE LIKE
SYSTEME DE CHARGEMENT ET DE DECHARGEMENT POUR CAMIONS, LEURS REMORQUES, CONTENEURS DE TRANSPORTS ET SIMILAIRES

(30) Priorität: 18.12.1997 DE 19756551
(43) Veröffentlichungstag der Anmeldung: 04.10.2000
(73) Patentinhaber: TLS Logistik GmbH, 80331 München (DE)
(72) Erfinder: KÜCHLER, Wolfgang, D-84489 Burghausen (DE)
(74) Vertreter: HOFFMANN - EITLE
(86) Internationale Anmeldenummer: EP9808348
(87) Internationale Veröffentlichungsnummer: WO9932326

(56) Entgegenhaltungen:
- EP-A- 0 268 323
- US-A- 2 534 057
- US-A- 3 904 022
- US-A- 4 256 222

## Beschreibung

Die Erfindung betrifft ein Be- und Entladesystem in oder für den Einbau in Lastkraftwagen, deren Anhänger, Transportcontainer und dergl. und mit zwei nebeneinander längsverlaufenden Ladebahnen.

Ein derartiges System ist beispielsweise aus der US-Patentschrift 3 937 338 sowie der PCT-Veröffentlichung wo 92/04263 bekannt. Damit können im wesentlichen gleichartige Gebinde, wie z.B. beladene Standardpaletten, in Längsrichtung des Fahrzeugs bzw. Laderaums verfahren werden, um dessen Be- und Entladung zu erleichtern. Die Ladebahnen werden von versenkten Ketten- oder Förderbändern gebildet. Damit können im Regelfall jedoch stets nur ganze Zeilen der betreffenden Gebinde ein- und ausverfahren werden.

Darüber hinaus sind etwa aus der DE-OS 44 00 829 und dem DE-GM G 91 03 198.2 Regalbediengeräte bekannt, die ein längs einer Fahrgasse verfahrbares Gestell mit Querfördermitteln aufweisen, um davon aufgenommene Gebinde seitwärts in Einlagerungskanäle be-fördern bzw. daraus entnehmen zu können. Die Querfördermittel weisen einen Hubtisch auf, um die betreffenden Gebinde von einem Rollenförderer zu einem anderen um- bzw. abzusetzen.

Davon ausgehend liegt der Erfindung die Aufgabe zugrunde, ein Be- und Entladesystem der eingangs genannten Art so weiterzubilden, daß es, insoweit ähnlich einem Regalbediengerät, in der Lage ist, eine freizügige Ladung und Entladung einzelner Gebinde zu ermöglichen.

Diese Aufgabe ist maßgeblich durch das Kennzeichnungsmerkmal des Anspruchs 1 gelöst. Die Unteransprüche geben darüber hinausgehend vorteilhafte Ausgestaltungsmöglichkeiten an.

Das betreffende entlang den Ladebahnen verfahrbare Querfördermittel ermöglicht es, einzelne Gebinde an beliebiger Stelle von einer Ladebahn auf die andere zu übernehmen und so, ggf. in mehreren Schritten, jedes einzelne Gebinde an einer beliebigen Stelle der Ladefläche zu lagern bzw. von dort weg zur Ein-/Ausladestelle zu holen. Dabei kann ein entsprechendes Sortieren der Gebinde gewünschtenfalls, computergesteuert, auch während der Fahrt erfolgen, was nicht zuletzt dann von Interesse ist, wenn etwa während einer Fahrt die Fahrtroute geändert und zwischen der aufeinanderfolgenden Belieferung einzelner Kunden umdisponiert werden muß.

Nachfolgend wird ein bevorzugtes Ausführungsbeispiel anhand der Figuren genauer beschrieben. Von diesen zeigt
- Fig. 1: eine (etwas schematisierte) Draufsicht auf das betreffende Be- und Entladesystems auf einer LKW-Ladefläche samt einer zugeordneten ortsfesten Be- und Entladevorrichtung,
- Fig. 2: einen vertikalen Längsschnitt entlang der Linie II-II von Fig. 1,
- Fig. 3: einen vertikalen Querschnitt entlang der Linie III-III von Fig. 1,
- Fig. 4: einen vertikalen Querschnitt entlang der Linie IV-IV von Fig. 1,
- Fig. 5: eine schematische Seitenansicht einer rückseitig an das Be- und Entladesystem anschließenden, ausklappbaren und im ausgeklappten Zustand die Ladefläche vergrößernden Speichervorrichtung zur vorübergehenden Aufnahme einzelner Ladungsgebinde und
- Fig. 6: eine schematisierte perspektivische Stirnansicht eines mit dem betreffenden Be- und Entladesystem samt Speichervorrichtung ausgestatteten LKW- oder Containerladeraums.

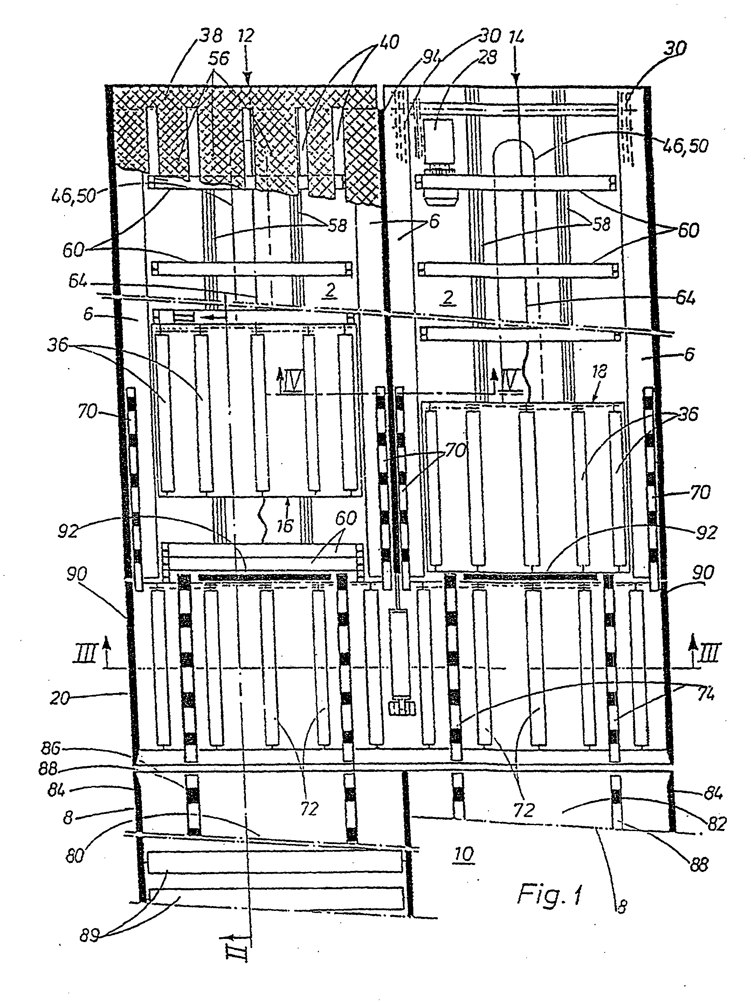

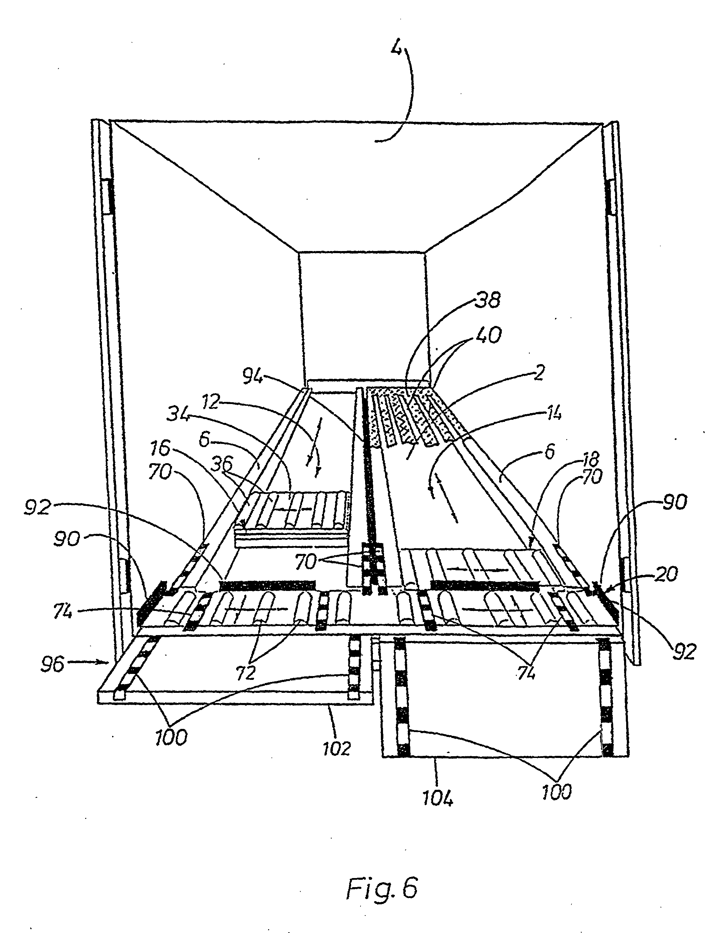

'Wie vor allem aus den Figuren 1 und 6 ersichtlich, ist auf dem Boden 2 eines Laderaums 4 - etwa eines LKW- oder Containerladeraums - ein vorzugsweise aus Leichtmetall gefertigter Rahmen 6 gelagert, der alle wesentlichen Teile des erfindungsgemäßen Be- und Entladesystems aufnimmt mit Ausnahme der ortsfesten Be- und Entladevorrichtung 8, die auf einer ortsfesten Laderampe 10 oder dergl. aufruht.

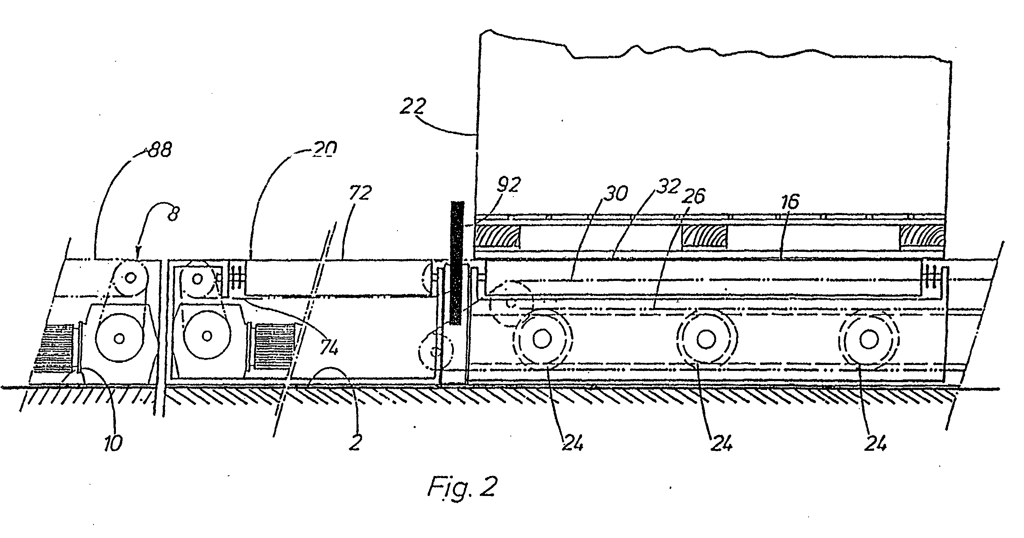

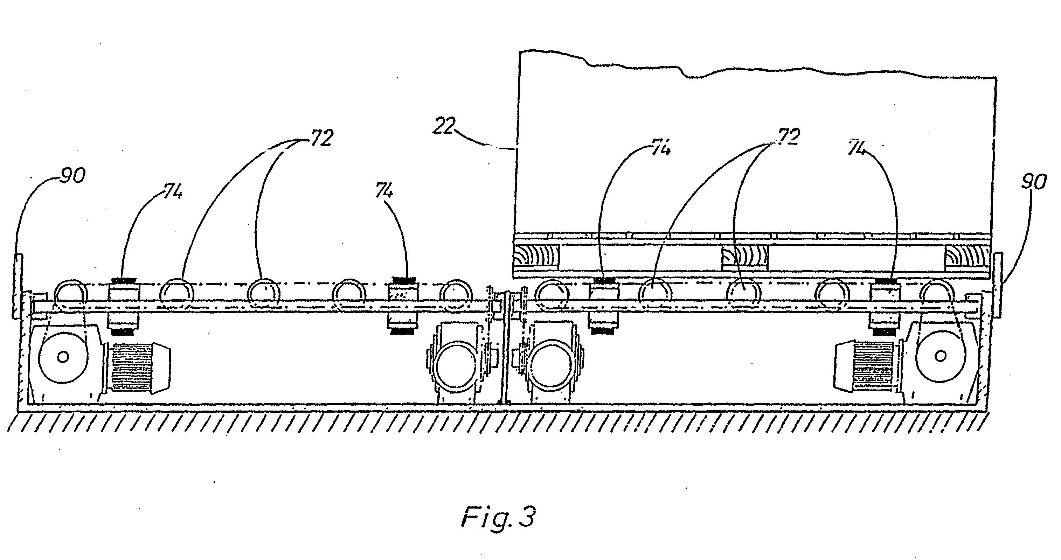

Abgesehen von der ortsfesten Be- und Entladevorrichtung 8 besteht das erfindungsgemäße Be- und Entladesystem im wesentlichen aus zwei nebeneinanderliegend in bezug auf den Laderaum 4 längsverlaufenden Ladebahnen 12 und 14, auf denen Querfördermittel in Form je eines Wagens 16 bzw. 18 verfahrbar sind, sowie einer stirnseitig den beiden Ladebahnen 12 und 14 vorgelagerten Kreuzfördervorrichtung 20. Während die Wagen 16 und 18 in der Lage sind, einzelne Ladungsgebinde 22 (Figuren 2 und 3), wie z.B. sogenannte Euro-Paletten, entlang der jeweiligen Ladebahn 12 bzw. 14 zu verfahren und, im Verein miteinander, von einer Ladebahn zu der anderen umzusetzen, vermag die Kreuzfördervorrichtung 20 von der ortsfesten Be- und Entladevorrichtung 8 angelieferte Gebinde 22 zu übernehmen, in Querrichtung in eine geeignete Position, fluchtend mit einer gewünschten der beiden Ladebahnen 12 und 14, zu verbringen, dabei auszurichten und sodann auf den Wagen 16 bzw. 18 der betreffenden Ladebahn zu übergeben.

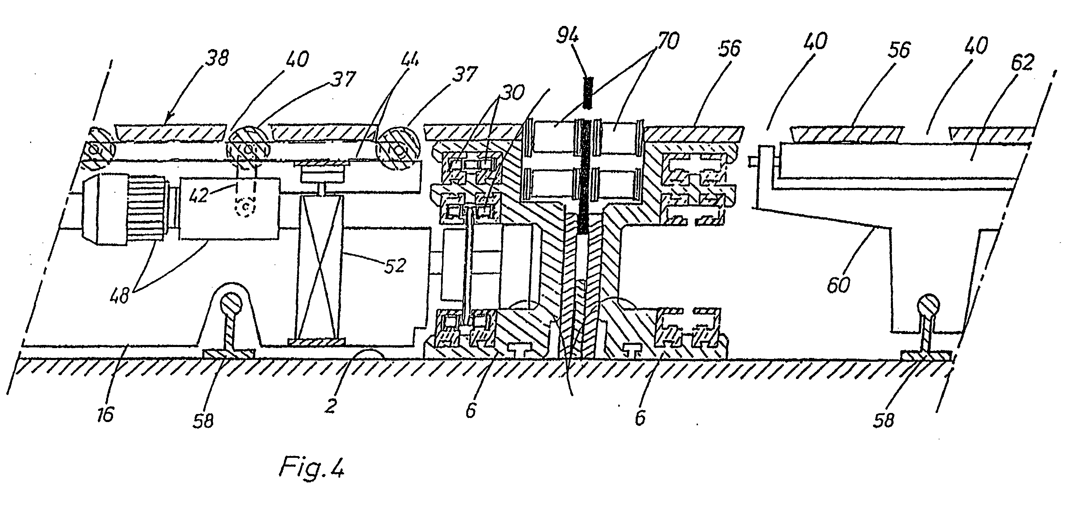

Wie aus den Figuren 1 und 2 ersichtlich, werden die beiden Wagen 16 und 18 über Zahnräder 24, die entlang einer fest in dem Rahmen 6 angeordneten Zahnstange 26 laufen, seitens eines Hydraulik- oder Elektromotors 28 über eine Kette 30 angetrieben, an der sich die Zahnräder 24, gegenüberliegend der Zahnstange 26, abwälzen. Auf diese Weise erhält der jeweilige Wagen 16 bzw. 18 die halbe Geschwindigkeit der Kette 30, während die auf den Wagen einwirkende Antriebskraft das Doppelte der in der Kette wirksamen Zugkraft beträgt. Wie insbesondere aus Fig. 4 ersichtlich, kann die Zahnstange 26 gleichfalls aus einer - in diesem Fall fest an dem Rahmen 6 angebrachten - Kette bestehen.

Die Wagen 16 und 18 besitzen jeweils eine Auflagefläche 32 (Fig. 2) , die in ihren Abmessungen etwa der Grundfläche eines einzelnen Gebindes 22 entspricht und von einem Hubtisch 34 gebildet wird, der einen Rollenförderer 36 mit in bezug auf die Ladebahnen 12 und 14 längsverlaufenden Rollen 37 trägt. Der Hubtisch 34 ist in der Lage, die Rollen 37 bis über das Niveau einer Abdeckung 38 des Rahmens 6 hinaus anzuheben, die dazu durchgehend längsverlaufende Schlitze 40 aufweist. Damit können die Rollen 37 ein von dem jeweiligen Wagen 16 bzw. 18 aufgenommenes Gebinde 22 längs wie auch seitswärts in bezug auf die Achse der betreffenden Ladebahn 12 bzw. 14 versetzen.

Der Antrieb der Rollen 37 erfolgt über Ketten 42 und 44 seitens eines an dem betreffenden Hubtisch 34 angebrachten, aus einem Schleppkabel oder Schleppschlauch 46 gespeisten Motors 48, beispielsweise elektrischen Getriebemotors oder Hydraulikmotors, derjenige des Hubtischs 34 über aus einem Schleppschlauch 50 gespeiste pneumatische oder hydraulische Hubzylinder 52 (Fig. 4).

Wie aus Fig. 4 ersichtlich, laufen die beiden Wagen 16 und 18 auf Laufschienen 54 als Bestandteile des Rahmens 6, die, ebenso wie die Zahnstangen 26 und Ketten 30, so weit gegenüber der Abdeckung 38 versenkt sind, daß diese auch in herkömmlicher Weise als Ladefläche nutzbar ist. Um dazu die langen durch die Schlitze 40 voneinander getrennten Partien 56 der Abdeckung 38 von unten her abzustützen, sind in dem Rahmen 6 innerhalb einer jeden Ladebahn 12 bzw. 14 längsverlaufende, auf dem Boden 2 des Laderaums 4 aufliegende und lose durch den jeweiligen Wagen 16 bzw. 18 hindurchlaufende Schienen 58 angeordnet, auf denen vor und hinter dem betreffenden Wagen jeweils mehrere Schleppstützlager 60 längsverschiebbar geführt sind. Die Schleppstützlager 60 weisen oberseitig jeweils eine Tragrolle 62 auf, auf der die Abdeckung 38 aufzuliegen vermag. Sie sind untereinander, mit jeweils einem Ende des Rahmens 6 und mit dem betreffenden Wagen 16 bzw. 18 durch eine Kette oder ein Seil 64 verbunden, so daß sie je nach der Position des Wagens gleiche Abstände einnehmen oder eng beieinanderliegen können, wozu sie von dem Wagen auseinandergezogen bzw. gegeneinandergeschoben werden.

Wie aus den Figuren 1, 4 und 6 ersichtlich, sind beiderseits der Wagen 16 und 18 sowie zwischen diesen antreibbare Kettenförderer 70 angeordnet, um Gebinde 22 von der Kreuzfördervorrichtung 20 auf das benachbarte Ende der jeweiligen Ladebahn 12 bzw. 14 zu übergeben bzw. von dort auf die Kreuzfördervorrichtung 20 zu holen.

Die Kreuzfördervorrichtung 20 weist zwei querverlaufende, symmetrisch zur Längsmittelebene des Laderaums 4 aneinanderschließende, voneinander unabhängige Rollenförderer 72 sowie insgesamt vier zwischen einzelnen Rollen der Rollenförderer 72 längsverlaufend angeordnete und über das Auflageniveau der Rollenförderer 72 anhebbare Kettenförderer 74 auf.

Die ortsfeste Be- und Entladevorrichtung 8 besteht aus zwei nebeneinanderliegenden Einheiten 80 und 82 von jeweils etwa der halben Breite des Laderaums 4 in einem gemeinsamen Rahmen 84. In dem Rahmen 84 sind auf jeder Seite zwei mit Abstand nebeneinanderliegende, zu der Rampenkante 86 hin gerichtete Kettenförderer 88 und, diesen vorausgehend, eine Parkeinrichtung in Gestalt eines Rollenförderers 89 gelagert. Die Kettenförderer 88 der beiden Einheiten 80 und 82 sind ebenso wie deren Rollenförderer 89 unabhängig voneinander und in beiden Richtungen antreibbar.

Wird nun von einer der Einheiten 80 und 82, genauer gesagt von deren Kettenförderern 88, ein Gebinde 22 angeliefert, so wird dieses vermittels zweier Kettenförderer 74 der Kreuzfördervorrichtung 20 auf diese übernommen. Bei abgesenkten Kettenförderern 74 bewirken sodann die Rollenförderer 72 der Kreuzfördervorrichtung 20 eine ggf. erforderliche seitliche Versetzung des betreffenden Gebindes 22 vor die gewünschte der beiden Ladebahnen 12 und 14. Dabei erfolgt diese seitliche Versetzung bis zum Anstoß an einer von zwei geringfügig elastisch nachgiebigen Anschlagflächen 90 an den voneinander abgewandten Stirnseiten der Rollenförderer 72. Dazu noch ist stirnseitig zu Beginn einer jeden der Ladebahnen 12 und 14 im Anschluß an die Kreuzfördervorrichtung 20 je eine Anschlagplatte 92 nach oben ausfahrbar. Durch die Anschlagflächen 90 im Verein mit den Anschlagplatten 92 ist ein jedes der auf der Kreuzfördervorrichtung 20 befindlichen Gebinde 22 zuverlässig hinsichtlich Winkel und Position gegenüber der anschließenden Ladebahn 12 bzw. 14 ausrichtbar. Nach erfolgter Ausrichtung treten die Kettenförderer 74 erneut in Funktion, um zusammen mit zweien der Kettenförderer 70 das Gebinde 22 auf das benachbarte Ende der jeweiligen Ladebahn 12 bzw. 14 zu überführen.

Ist das erfolgt, so nimmt der betreffende Wagen 16 bzw. 18 das Gebinde auf und transportiert es entlang der Ladebahn, bis es an den vorausgehend bereits auf der gleichen Ladebahn gestauten Gebinden anstößt, worauf der Wagen mit abgesenkten Rollen 37 zurückkehren kann. Die jeweiligen Bewegungen werden unter Zuhilfenahme von Sensoren gesteuert. Eine sich zwischen den beiden Ladebahnen im wesentlichen über deren gesamte Länge erstreckende, absenkbare Anschlagplatte 94 verhindert, daß auf den Ladebahnen gestaute Gebinde während des Transports seitwärts verrutschen können.

Falls gewünscht, kann dasselbe oder ein anderes Gebinde 22 auch noch außerhalb der Kreuzfördervorrichtung 20 von einer Ladebahn 12 bzw. 14 auf die andere übergeben werden. Dazu fahren beide Wagen 16 und 18 nebeneinanderliegend in die betreffende Position, worauf ihre Rollen 34 angehoben und im erforderlichen Sinn angetrieben werden. Dies setzt natürlich voraus, daß die betreffende Position über der zweiten Ladebahn frei ist. Sollte dies nicht der Fall sein, so kann die betreffende Position durch ggf. mehrmaliges Umsetzen und Verfahren der übrigen Gebinde 22 freigeräumt werden. Dies kann - unter automatischer Steuerung - auch noch während der Fahrt geschehen, wozu es lediglich erforderlich ist, eine einzige Position auf der Abdeckung 38 freizuhalten. Im übrigen aber kann außer den beiden Ladebahnen 12 und 14 auch die Kreuzfördervorrichtung 20 beladen werden, sofern diese nicht, was auch möglich ist - dann natürlich von dem Rahmen 6 getrennt - auf einer Ladebordwand angeordnet wird.

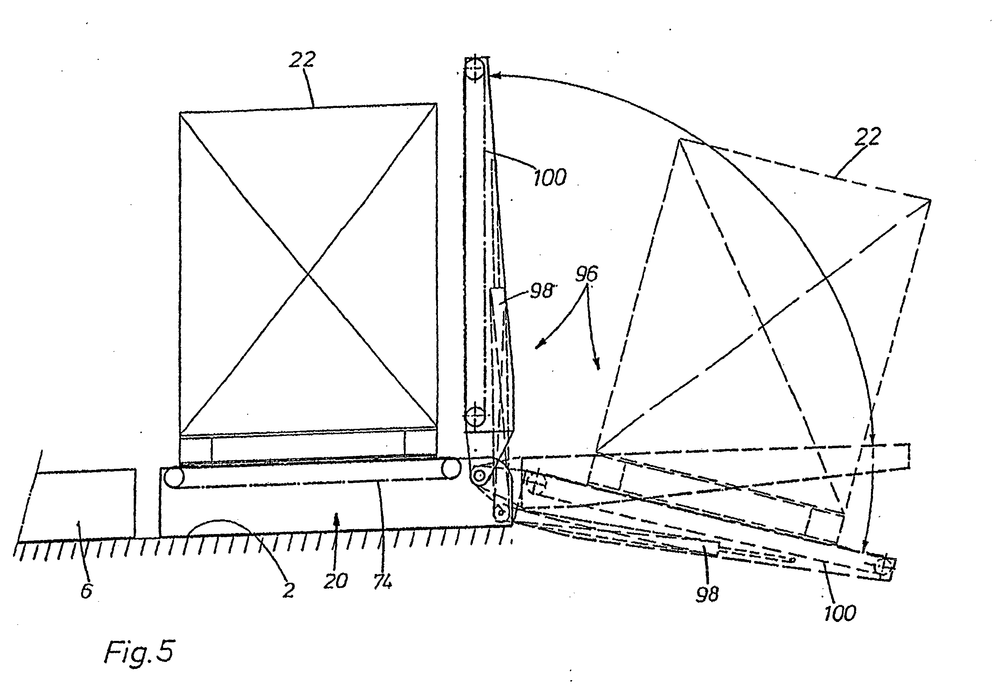

Um ohne Preisgabe der Umsetzbarkeit der geladenen Gebinde 22 ohne externe Hilfsmittel auch noch den letzten Platz im Laderaum 4 zur Beladung ausnutzen zu können, kann, wie in den Figuren 5 und 6 gezeigt, an der Kreuzfördervorrichtung 20 eine ausfahrbare, d.h. ausklappbare, und im ausgefahrenen Zustand die Ladefläche vergrößernde Speichervorrichtung 96 für die vorübergehende Aufnahme eines oder auch zweier der geladenen Gebinde 22 vorgesehen sein. In dem gezeigten Beispiel ist die Speichervorrichtung 96 mittels eines Zylinders 98 ähnlich einer Ladebordwand abklappbar sowie in horizontaler Lage wie auch in gewissen Schräglagen fixierbar. Darüber hinaus aber ist sie vollkommen abklappbar, um bei Nichtgebrauch nicht im Wege zu stehen. Anderenfalls aber könnte sie auch in eine normale Ladebordwand integriert sein. Sie weist oberseitig in bezug auf ihre horizontale Lage mindestens einen Rollensatz, ein Transportband oder, wie gezeigt, Kettenförderer 100 auf, die es erlauben, einzelne Gebinde leicht auf sie drauf oder von ihr herunter auf die Ladefläche zu bugsieren.

Die Speichervorrichtung 96 kann sich, wie in Fig. 6 gezeigt, über die gesamte Breite der Ladefläche erstrecken und in diesem Fall mittig geteilt sein, so daß zwei getrennt bedienbare Hälften 102 und 104, jeweils für die Aufnahme eines einzelnen Gebindes 22, fluchtend mit einer jeden der Ladebahnen 12 und 14 bestehen. In Schräglage kann die Speichervorrichtung 96 zur Anpassung an unterschiedliche Laderampenhöhen Verwendung finden. Alternativ könnte die Speichervorrichtung 96 jedoch auch nach Art einer Schublade oder einer horizontal ausschwenkbaren Bühne gestaltet sein.

Die Steuerung sämtlicher vorausgehend beschriebener Elemente einschließlich derjenigen der Speichervorrichtung 94 und der ortsfesten Be- und Entladevorrichtung 8 erfolgt zweckmäßigerweise computergestützt, vorzugsweise über einen Bordcomputer, und zwar in einer Weise, daß von dem Bedienungs-, d.h. im allgemeinen dem Fahrpersonal, lediglich bestimmte Adressaten nach Reihenfolge und allenfalls Menge einzugeben sind. Unterstützend kann dabei eine Kennzeichnung der einzelnen Gebinde 22 durch einen automatisch lesbaren Code, z.B. Strichcode, Verwendung finden.

Derartige Steuerungsmaßnahmen sind dem Computerfachmann geläufig, so daß es sich erübrigt, hierauf weiter einzugehen.

Das so weit beschriebene Be- und Entladesystem erlaubt eine im Vergleich zur bisherigen Praxis außerordentlich beschleunigte Be- und Entladung von LKWs, deren Anhängern, Transportcontainern und dergl., selbst falls zwischen Be- und Entladung eine Umdisposition zu erfolgen hat. Dazu bedarf es nur einer einzigen Bedienungsperson.

Gewünschtenfalls kann das betreffende System als selbständige Einheit oder Baugruppe nachrüstbar und auch wieder entfernbar sein, wozu es genügt, es auf eine herkömmliche Ladefläche aufzulegen. Andererseits kann es bei der Herstellung von Neufahrzeugen in den Boden 2 des Laderaums integriert sein, wodurch sich Ladehöhe, Material und Gewicht einsparen lassen. In diesem Fall bildet die Abdeckung 38 mit ihren Schlitzen 40 den Boden 2 des Laderaums 4, während der darunterliegende Rahmen 6 zugleich tragendes Element sein kann.

Wegen des Vorhandenseins der Kreuzfördervorrichtung 20 oder allein schon wegen der Übergabemöglichkeit von einem der beiden Wagen 16 und 18 auf den anderen genügt u.U. bereits eine einzige der beiden Einheiten 80 und 82 der ortsfesten Be- und Entladevorrichtung. Dagegen ermöglichen die beiden nebeneinanderliegenden, voneinander unabhängigen Einheiten ein rasches voneinander unabhängiges Be- und Entladen beider Ladebahnen 12 und 14. So kann etwa die eine bereits beladen werden während die andere noch entladen wird.

Sollte indessen an der einen oder anderen Ladestelle die erwähnte ortsfeste Be- und Entladevorrichtung gänzlich fehlen, so kann die Be- und Entladung auch mittels eines Gabelstaplers oder eben einer Ladebordwand erfolgen. Ebenso kann ein Gabelstapler, ggf. im Verein mit einem oder beiden der Wagen 16 und 18, bei einem Planen-LKW oder -Anhänger auch für eine seitliche Be- und Enladung Verwendung finden. Sodann kann zwischen zwei gleichartig ausgerüsteten und entsprechend beieinander geparkten Fahrzeugen oder Containern eine unmittelbare stirnseitige wie auch seitliche Umladung erfolgen.

## Patentansprüche

1. Be- und Entladesystem in oder für den Einbau in Lastkraftwagen, deren Anhänger, Transportcontainer und dergl. und mit zwei nebeneinander längsverlaufenden Ladebahnen (12, 14) dadurch ***gekennzeichnet,*** daß mindestens ein entlang den Ladebahnen (12, 14) verfahrbares Querfördermittel vorgesehen ist, das in der Lage ist, einzelne Ladungsgebinde (22) auf den Ladebahnen entlangzubewegen und an jeder beliebigen Stelle von einer Ladebahn zu der anderen umzusetzen.

2. Be- und Entladesystem nach Anspruch 1, dadurch ***gekennzeichnet*,** daß die Ladebahnen (12, 14) gegenüber einer ebenen Ladefläche (38) versenkte Laufschienen (54) aufweisen und je ein auf den Laufschienen einer jeden Ladebahn laufender Wagen (16, 18) ein eigenes Querfördermittel bildet.

3. Be- und Entladesystem nach Anspruch 2, dadurch ***gekennzeichnet,*** daß jeder Wagen (16, 18) einen unter die Ladefläche (38) absenkbaren Rollenförderer (36) aufweist.

4. Be- und Entladesystem nach Anspruch 3, dadurch ***gekennzeich******net,*** daß die Ladefläche (38) von einer für den Hindurchtritt der Rollen (37) des betreffenden Rollenförderers (36) längsverlaufende Schlitze (40) aufweisenden Abdeckung gebildet wird, die auf je einer Serie längsverfahrbarer, untereinander und mit dem jeweiligen Wagen (16, 18) gekuppelter Schleppstützlager (60) vor bzw. hinter dem Wagen aufruht.

5. Be- und Entladesystem nach einem der vorhergehenden Ansprüche, dadurch ***gekennzeichnet,*** daß den beiden Ladebahnen (12, 14) stirnseitig eine Kreuzfördervorrichtung (20) vorgelagert ist, die in der Lage ist, davon aufgenommene Ladungsgebinde (22) von der Achse einer der Ladebahnen (12, 14) zu derjenigen der anderen zu versetzen sowie zwischen einer jeden Ladebahn und einer externen Ladestelle, wie z.B. Laderampe (10), zu überführen.

6. Be- und Entladesystem nach Anspruch 5, dadurch ***gekennzeichnet*,** daß die Kreuzfördervorrichtung (20) aus mindestens einem quergerichteten Rollenförderer (72) mit zwischen einzelnen Rollen desselben längsverlaufend angeordneten Kettenförderern (74) besteht.

7. Be- und Entladesystem nach Anspruch 5 oder 6, dadurch ***ge******kennzeichnet,*** daß zu beiden Seiten der Kreuzfördervorrichtung (20) Anschlagflächen (90) für die Ausrichtung darauf befindlicher Ladungsgebinde (22) - vorzugsweise nachgiebig-angeordnet sind.

8. Be- und Entladesystem nach einem der Ansprüche 5 - 7, dadurch ***gekennzeichnet,*** daß im Anschluß an die Kreuzfördervorrichtung (20) stirnseitig vor den beiden Ladebahnen (12, 14) jeweils eine nach oben ausfahrbare Anschlagplatte (92) für auf der Kreuzfördervorrichtung befindliche Ladungsgebinde (22) angeordnet ist.

9. Be- und Entladesystem nach einem der Ansprüche 5 - 8, dadurch ***gekennzeichnet*,** daß die Kreuzfördervorrichtung (20) auf einer Ladebordwand angebracht oder anbringbar ist.

10. Be- und Entladesystem nach einem der vorhergehenden Ansprüche, dadurch ***gekennzeichnet,*** daß zwischen den beiden Ladebahnen (12, 14), im wesentlichen über deren gesamte Länge verlaufend, eine absenkbare Anschlagplatte (94) gegen seitliches Verrutschen der gestauten Ladungsgebinde (22) angeordnet ist.

11. Be- und Entladesystem nach einem der vorhergehenden Ansprüche, dadurch gekennzeichnet, daß die Querfördermittel (16, 18) in der Lage sind, Ladungsgebinde (22) auch unmittelbar von den Seiten des Fahrzeugs oder dergl. her zu übernehmen bzw. von dort her abzugeben.

12. Be- und Entladesystem nach einem der vorhergehenden Ansprüche, ***gekennzeichnet*** durch eine ausfahrbare, im ausgefahrenen Zustand die verfügbare Gesamtladefläche vergrößernde Speichervorrichtung (96) zur vorübergehenden Aufnahme einzelner der geladenen Ladungsgebinde (22).

13. Be- und Entladesystem nach Anspruch 12, dadurch **gekennzeichnet,** daß die Speichervorrichtung (96) in eine Ladebordwand integriert ist.

14. Be- und Entladesystem nach einem der vorhergehenden Ansprüche, **gekennzeichnet** durch eine zugehörige ortsfeste Be- und Entladevorrichtung (8) mit Rollen-, Band- und/oder Kettenfördermitteln (88) zur Anordnung auf einer Laderampe (10) oder dergl..

15. Be- und Entladesystem nach einem der vorhergehenden Ansprüche, dadurch ***gekennzeichnet,*** daß es als selbständige Einheit oder Baugruppe in vorhandenen Fahrzeugen bzw. Transportcontainern und dergl. - vorzugsweise wieder entfernbar - nachrüstbar ist.

16. Be- und Entladesystem nach einem der vorhergehenden Ansprüche, dadurch ***gekennzeichnet,*** daß es computergestützt oder, unter Zuhilfenahme von Sensoren und ggf. maschinenlesbaren Codes auf den betreffenden Ladungsgebinden (22), computergesteuert ist.

17. Be- und Entladesystem nach Anspruch 16, dadurch ***gekennzeichnet*,** daß der betreffende Computer ein programmierbarer, vorzugsweise auch noch während des Transports einsatzfähiger Bordcomputer ist.

18. Be- und Entladesystem nach Anspruch 17 in Verbindung mit Anspruch 12 und/oder 14, dadurch ***gekennzeichnet,*** daß seitens des gleichen Computers auch die Speichervorrichtung (96) und/oder die ortsfeste Be- und Entladevorrichtung (8) steuerbar ist.

## Claims

1. Loading and unloading system in or for installation in motor trucks, their trailers, transport containers and similar and with two loading tracks (12, 14) running longitudinally next to one another, characterised in that at least one transverse conveyor, which can travel along the loading tracks (12, 14), is provided, which is capable of moving individual packing drums (22) along on the loading tracks and of transferring them from one loading track to the other at any chosen point.

2. Loading and unloading system according to Claim 1, characterised in that the loading tracks (12, 14) comprise running rails (54), countersunk with respect to a flat loading area (38), and that in each case a carriage (16, 18) running on the running rails of each loading track forms its own transverse conveyor.

3. Loading and unloading system according to Claim 2, characterised in that each carriage (16, 18) comprises a roller conveyor (36) which can be lowered under the loading area (38).

4. Loading and unloading system according to Claim 3, characterised in that the loading area (38) is formed by a covering comprising longitudinally running slots (40) for the rollers (37) of the roller conveyor (36) concerned to pass through, said covering resting in each case on a series of longitudinally movable tow support bearings (60) coupled to one another and to the respective carriage (16, 18) in front of or behind the carriage.

5. Loading and unloading system according to one of the preceding claims, characterised in that in front of the two loading tracks (12, 14) on the front side is positioned a cross conveyor device (20), which is capable of transferring packing drums (22), picked up from them, from the axis of one of the loading tracks (12, 14) to that of the other, as well as of conveying them between any one of the loading tracks and an external loading point, such as, e.g. a loading ramp (10).

6. Loading and unloading system according to Claim 5, characterised in that the cross conveyor device (20) consists of at least one transversely directed roller conveyor (72) with chain conveyors (74) arranged as running longitudinally between individual rollers thereof.

7. Loading and unloading system according to Claim 5 or 6, characterised in that arranged on both sides of the cross conveyor device (20) - preferably flexibly - are stop faces (90) for the alignment of packing drums (22) located thereon.

8. Loading and unloading system according to one of Claims 5 - 7, characterised in that adjoined to the cross conveyor device (20) at the front of the two loading tracks (12, 14) is arranged in each case one stop plate (92), which can be extended upwards, for packing drums (22) located on the cross conveyor device.

9. Loading and unloading system according to one of Claims 5 - 8, characterised in that the cross conveyor device (20) is mounted or can be mounted on a loading tailboard.

10. Loading and unloading system according to one of the preceding claims, characterised in that between the two loading tracks (12, 14), running substantially over their entire length, is arranged a stop plate (94), which can be lowered, against lateral slipping of the piled up packing drums (22).

11. Loading and unloading system according to one of the preceding claims, characterised in that the transverse conveyors (16, 18) are also capable of taking packing drums (22) directly from the sides of the vehicle or similar or of delivering them from there.

12. Loading and unloading system according to one of the preceding claims, characterised by an extendible storage device (96), which in the extended state increases the available overall loading area, for temporary accommodation of particular loaded packing drums (22).

13. Loading and unloading system according to Claim 12, characterised in that the storage device (96) is integrated into a loading tailboard.

14. Loading and unloading system according to one of the preceding claims, characterised by an associated stationary loading and unloading device (8) with roller, belt and/or chain conveyors (88) for placing on a loading ramp (10) or similar.

15. Loading and unloading system according to one of the preceding claims, characterised in that it can be retrofitted - preferably as removable again - as an independent unit or structural component in available vehicles or transport containers and similar.

16. Loading and unloading system according to one of the preceding claims, characterised in that it is computer-assisted or, with the aid of sensors and in some cases machine-readable codes on the packing drums (22) concerned, computer-controlled.

17. Loading and unloading system according to Claim 16, characterised in that the computer concerned is a programmable on-board computer, preferably also able to be used during transport.

18. Loading and unloading system according to Claim 17 in association with Claim 12 and/or 14, characterised in that the storage device (96) and/or the stationary loading and unloading device (8) is controllable by means of the same computer.

## Revendications

1. Système de chargement et de déchargement intégré ou conçu pour être intégré dans des camions, leurs remorques, conteneurs de transport et objets similaires, et muni de deux pistes de chargement (12, 14) s'étendant longitudinalement en juxtaposition, caractérisé par le fait qu'il est prévu au moins un moyen de convoyage transversal qui est mobile le long des pistes de chargement (12, 14) et est en mesure de déplacer des emballages individuels (22) le long desdites pistes de chargement, et de les transférer, à n'importe quel emplacement, d'une piste de chargement à l'autre.

2. Système de chargement et de déchargement selon la revendication 1, caractérisé par le fait que les pistes de chargement (12, 14) présentent des rails de roulement (54) encaissés vis-à-vis d'une surface plane de chargement (38), et un chariot (16, 18) respectif, roulant sur lesdits rails de roulement de chacune des pistes de chargement, forme un propre moyen de convoyage transversal.

3. Système de chargement et de déchargement selon la revendication 2, caractérisé par le fait que chaque chariot (16, 18) comporte un convoyeur (36) à rouleaux pouvant être abaissé au-dessous de la surface de chargement (38).

4. Système de chargement et de déchargement selon la revendication 3, caractérisé par le fait que la surface de chargement (38) est formée d'une coiffe qui possède des fentes (40) s'étendant longitudinalement, en vue du passage des rouleaux (37) du convoyeur (36) à rouleaux considéré, et qui repose, respectivement devant ou derrière le chariot, sur une série respective de portées d'appui de treuillage (60) mobiles longitudinalement, accouplées les unes aux autres et au chariot (16, 18) respectif.

5. Système de chargement et de déchargement selon l'une des revendications précédentes, caractérisé par le fait qu'un dispositif (20) de convoyage croisé, implanté frontalement en amont des deux pistes de chargement (12, 14), est en mesure de décaler des emballages (22) qu'il a prélevés, depuis l'axe de l'une desdites pistes de chargement (12, 14) jusqu'à celui de l'autre piste de chargement, ainsi que de les transférer entre chacune des pistes de chargement et une zone extérieure de chargement comme, par exemple, une rampe de chargement (10).

6. Système de chargement et de déchargement selon la revendication 5, caractérisé par le fait que le dispositif (20) de convoyage croisé est constitué d'au moins un convoyeur (72) à rouleaux orienté transversalement, associé à des convoyeurs (74) à chaînes agencés avec étendue longitudinale entre des rouleaux individuels dudit convoyeur.

7. Système de chargement et de déchargement selon la revendication 5 ou 6, caractérisé par le fait que des surfaces de butée (90), placées des deux côtés du dispositif (20) de convoyage croisé - en étant préférentiellement douées de souplesse -, sont affectées à l'orientation d'emballages (22) situés sur ledit dispositif.

8. Système de chargement et de déchargement selon l'une des revendications 5-7, caractérisé par le fait qu'une plaque de butée (92) respective, déployable vers le haut et assignée à des emballages (22) situés sur le dispositif de convoyage croisé, est placée frontalement dans la continuité directe dudit dispositif (20) de convoyage croisé, devant les deux pistes de chargement (12, 14).

9. Système de chargement et de déchargement selon l'une des revendications 5-8, caractérisé par le fait que le dispositif (20) de convoyage croisé est ou peut être mis en place sur une ridelle de chargement.

10. Système de chargement et de déchargement selon l'une des revendications précédentes, caractérisé par le fait qu'une plaque de butée (94) abaissable, destinée à interdire un ripage latéral des emballages (22) accumulés, est interposée entre les deux pistes de chargement (12, 14) en s'étendant, pour l'essentiel, sur toute la longueur de celles-ci.

11. Système de chargement et de déchargement selon l'une des revendications précédentes, caractérisé par le fait que les moyens (16, 18) de convoyage transversal sont également en mesure de prélever directement des emballages (22) depuis les côtés du véhicule ou objet similaire, ou de les délivrer respectivement depuis cet emplacement.

12. Système de chargement et de déchargement selon l'une des revendications précédentes, caractérisé par un dispositif de stockage (96) déployable, agrandissant la surface totale de chargement disponible lorsqu'il se trouve à l'état déployé, en vue de recevoir provisoirement quelques-uns des emballages (22) chargés.

13. Système de chargement et de déchargement selon la revendication 12, caractérisé par le fait que le dispositif de stockage (96) est intégré dans une ridelle.

14. Système de chargement et de déchargement selon l'une des revendications précédentes, caractérisé par un dispositif stationnaire associé (8) de chargement et de déchargement, muni de moyens convoyeurs (88) à rouleaux, à bandes et/ou à chaînes, en vue de l'installation sur une rampe de chargement (10) ou objet analogue.

15. Système de chargement et de déchargement selon l'une des revendications précédentes, caractérisé par le fait qu'il peut être intégré après coup, en tant qu'ensemble unitaire ou groupe structurel autonome - de préférence avec faculté de redémontage -, dans des véhicules ou des conteneurs de transport existants, et objets similaires.

16. Système de chargement et de déchargement selon l'une des revendications précédentes, caractérisé par le fait qu'il est assisté par ordinateur, ou commandé par ordinateur en recourant à des capteurs et, le cas échéant, à des codes lisibles à la machine et apposés sur les emballages (22) considérés.

17. Système de chargement et de déchargement selon la revendication 16, caractérisé par le fait que l'ordinateur considéré est un ordinateur embarqué programmable, de préférence encore apte à fonctionner au cours du transport.

18. Système de chargement et de déchargement selon la revendication 17 combinée à la revendication 12 et/ou 14, caractérisé par le fait que le même ordinateur permet aussi de commander le dispositif de stockage (96) et/ou le dispositif stationnaire (8) de chargement et de déchargement.
